# EUROPÄISCHE PATENTSCHRIFT

(11) **EP 3 061 712 B1**
(45) Veröffentlichungstag und Bekanntmachung des Hinweises auf die Patenterteilung: **28.06.2017**
(21) Anmeldenummer: 16000451.1
(22) Anmeldetag: 25.02.2016
(51) Int. Cl.: B65G 65/23

(54) **VORRICHTUNG UND VERFAHREN ZUM ENTLADEN VON ROLL- ODER WECHSELBEHÄLTERN**
Device and method for unloading rolling or interchangeable containers
DISPOSITIF ET PROCEDE DE DECHARGEMENT DE RECIPIENTS INTERCHANGEABLES OU ROULANTS

(30) Priorität: 26.02.2015 DE 102015003110
(43) Veröffentlichungstag der Anmeldung: 31.08.2016
(73) Patentinhaber: BEUMER GmbH & Co. KG, 59269 Beckum (DE)
(72) Erfinder: Heitplatz, Heino, 48317 Drensteinfurt (DE); Schäfer, Philipp, 33142 Büren (DE)
(74) Vertreter: Philipp, Matthias

(56) Entgegenhaltungen:
- EP-A1- 2 808 098
- DE-A1-102009 033 455
- DE-A1-102012 003 439
- US-A1- 2011 229 292

## Beschreibung

Die Erfindung betrifft eine Vorrichtung zum Entladen wahlweise eines Rollbehälters oder eines Wechselbehälters mit einer Entladevorrichtung und einem benachbart angeordneten Kippgerät zum Aufnehmen und Kippen eines mit Stückgut beladenen Rollbehälters, und ein Verfahren zum Entladen wahlweise eines Roll- oder Wechselbehälters unter Verwendung einer derartigen Vorrichtung.

Aus der EP 2 281 762 A1 ist ein Verfahren zum Entladen von Stückgütern aus einem Transportcontainer bekannt, wobei der Transportcontainer eine Entladeöffnung aufweist und in Richtung eines Abzugsbands gekippt wird, so dass Stückgüter aus dem Transportcontainer durch Kippen ausgeladen werden.

Aus der DE 10 2012 208 385 A1 ist eine Vorrichtung zum Entleeren eines mit Stückgut beladenen Ladungsträgers bekannt, die eine einem Förderer vorgeschaltete schräge Förderrampe aufweist, die durch Kippen des Ladungsträgers in Anlage mit dessen Auslassöffnung bringbar ist, so dass Stückgut aus dem Ladungsträger ausgeladen werden kann.

Die DE 10 2012 003 439 A1 zeigt eine Entladevorrichtung für Ladeeinheiten wie Wechselbehälter oder LKW-Laderäume, mit mehreren zusammenwirkenden Förderbändern.

Den beiden erstgenannten Vorrichtungen haftet der Nachteil an, dass es sich um feste Kombinationen einer Vorrichtung zum Kippen eines Transportcontainers bzw. Ladungsträgers mit einer nachgeschalteten Abzugseinrichtung für die entladenen Stückgüter handelt, so dass die jeweilige Vorrichtung ausschließlich für den Zweck der Entladung einer bestimmten Bauart von Ladungsträgern verwendet werden kann.

Die Aufgabe der Erfindung besteht darin, eine Vorrichtung zum Entladen wahlweise eines Rollbehälters oder eines Wechselbehälters mit einem benachbart zu einer Entladevorrichtung angeordneten Kippgerät zum Aufnehmen und Kippen eines beladenen Rollbehälters bereitzustellen, so dass die Möglichkeit besteht, den Rollbehälter zu kippen und seinen Inhalt, in der Regel Stückgut, zu entladen und beispielsweise auf eine vorhandene Fördereinrichtung zu übergeben, oder einen Wechselbehälter unmittelbar mit Hilfe der Entladevorrichtung zu entladen, wobei sich dann das Kippgerät in einer Ruhestellung befindet, so dass eine größere Flexibilität im Einsatz besteht.

Eine weitere Aufgabe der Erfindung besteht darin, ein Verfahren zum Entladen eines Rollbehälters oder eines Wechselbehälters unter Verwendung einer derartigen Vorrichtung bereitzustellen.

Die Aufgabe der Erfindung wird zunächst durch eine Vorrichtung mit den Merkmalen des Anspruchs 1 gelöst. Das Aufnahmemittel ist somit in der Lage, zwischen einer insbesondere vertikalen Ruhestellung und einer insbesondere horizontalen Aufnahmestellung bewegt zu werden. Befindet sich das Kippgerät bzw. das Aufnahmemittel in der Ruhestellung, ist der Wechselbehälter-Entladebereich frei zur Positionierung eines Wechselbehälters, und es kann mit der Entladevorrichtung ein Wechselbehälter entladen werden. Ist das Kippgerät bzw. Aufnahmemittel in der Aufnahmestellung, können Rollbehälter aufgenommen, gekippt und auf die Entladevorrichtung, bspw. einen Aufnahmeförderer wie Gurt- oder Rollenförderer, entladen werden.

Bevorzugt ist vorgesehen, dass das Kippgerät mit einer Schwenkeinrichtung, mit der das Aufnahmemittel aus der Ruhestellung um eine Schwenkachse in die vorzugsweise horizontale Aufnahmestellung, in der ein Rollbehälter auf einem Untergrund über das Aufnahmemittel rollbar ist, schwenkbar ist, und mit einer Kippeinrichtung, mit der das Aufnahmemittel zusammen mit dem Rollbehälter aus der Aufnahmestellung um eine horizontale Kippachse in die Kippstellung kippbar ist, versehen ist.

Die Entladevorrichtung ist bevorzugt verfahrbar, während das Kippgerät vorzugsweise stationär ausgebildet oder an einem festen Untergrund befestigt ist. Denkbar wäre auch, dass das Kippgerät verfahrbar ist, etwa gemeinsam mit der Entladevorrichtung, mit der es über einen gemeinsamen Maschinenrahmen oder mit deren Maschinenrahmen es gekoppelt sein kann.

Ein Kippwinkel, um den das Aufnahmemittel und damit der Rollbehälter zum bzw. beim Entladen um die Kippachse kippbar ist, kann bis zu 90° betragen, bezogen auf eine vertikale Bezugsrichtung, und liegt in der Praxis zwischen 10° und 80° und vorzugsweise zwischen 20° und 60°.

Um den Austrag der Stückgutteile aus dem Rollbehälter zu unterstützen, kann vorgesehen sein, dass die Kippeinrichtung pulsierend antreibbar ist, um eine oszillierende oder leicht ruck- oder stoßartige Kippbewegung der Aufnahmeplattform und des Rollbehälters zu bewirken. Eine Amplitude einer derartigen Oszillationsbewegung kann beispielsweise zwischen 1° und 10° liegen, als Kippbewegung um die Kippachse, mit einer Frequenz von beispielsweise zwischen 1 und 10 Hz, bevorzugt mit einem zeitlichen Verlauf in Rechteck- oder Sägezahnform (beispielsweise unsymmetrische Sägezahnform mit einer langsamen Bewegung in Richtung eines größeren Kippwinkels und einer raschen Zurückbewegung, oder umgekehrt).

Bevorzugt ist vorgesehen, dass die Schwenkachse senkrecht zu der Kippachse angeordnet ist, wobei die Schwenkachse insbesondere horizontal angeordnet sein kann. Die Kippachse ist in der Aufnahmestellung horizontal und kann in der Ruhestellung vertikal sein.

Das Aufnahmemittel kann in der Ruhestellung vertikal angeordnet sein und um eine horizontale Schwenkachse in die Aufnahmestellung schwenkbar sein, oder aber in einer Bewegung in einer horizontalen Ebene um eine vertikale Schwenkachse in die Aufnahmestellung schwenkbar sein.

Das Aufnahmemittel ist bevorzugt mit einem Mittel zum Fixieren oder Immobilisieren des Rollbehälters an dem Aufnahmemittel versehen, beispielsweise mit einer mechanischen Verriegelungseinrichtung, einer magnetischen oder elektromagnetischen Halteeinrichtung oder ähnlichem, wobei das Mittel zum Fixieren des Rollbehälters automatisch aktivierbar sein kann, sobald der Rollbehälter in einer vorgegebenen Relativstellung zu dem Aufnahmemittel steht, beispielsweise mittels eines an dem Aufnahmemittel angehaltenen Sensors, Kontaktschalters oder Verriegelungselements. Alternativ kann der Rollbehälter mit einem Mittel zum Fixieren oder Immobilisieren an dem Aufnahmemittel versehen sein.

Das Kippgerät kann ein fest auf einem Untergrund stehendes oder ein verfahrbares und insbesondere mit der Entladevorrichtung gekoppeltes Maschinengestell mit einer Steuereinheit aufweisen, wobei die Schwenkeinrichtung an dem Maschinengestell gehalten sein kann. Schwenk- und Kippeinrichtung können mittels der Steuereinheit zur Bewegung des Aufnahmemittels zwischen der Ruhestellung, der Aufnahmestellung und einer Kippstellung steuerbar sein.

Es kann vorgesehen sein, dass die Kippeinrichtung an dem Aufnahmemittel angeordnet ist und zusammen mit diesem um die Schwenkachse aus der Ruhe- in die Aufnahmestellung schwenkbar ist.

Die Steuereinheit kann von einer Bedienungsperson betätigbar oder über eine drahtgebundene oder drahtlose Fernbedienung von einer externen Steuerung, beispielsweise einem von einer Bedienungsperson betätigten Steuerpult, ansteuerbar sein.

Die Entladevorrichtung kann einen Abzugsförderer umfassen, wobei das Kippgerät benachbart zu dem Abzugsförderer angeordnet ist und mittels des Kippgeräts ein auf dem Aufnahmemittel aufgenommener Rollbehälter mit einer Entladeöffnung in Richtung einer Förderoberfläche des Abzugsförderers kippbar und auf diesen entladbar ist. Eine Förderrichtung des Abzugsförderers ist bevorzugt senkrecht zur Kippachse des Kippgeräts angeordnet. Die Förderrichtung des Abzugsförderers ist zweckmäßigerweise vertikal oder schräg nach oben, so dass Stückgut im Bereich der Entladeöffnung erfasst und bevorzugt schräg nach oben in einer Abzugsrichtung wegtransportiert wird. Der Abzugsförderer kann wahlweise in eine Annahmestellung, in der seine Förderoberfläche im Wesentlichen senkrecht steht, oder in eine schräg geneigte Entladestellung bringbar sein.

Der Abzugsförderer kann einen dem Kippgerät zunächst angeordneten Aufnahmeförderer, der ein in Richtung des Aufnahmemittels frei vorstehendes Aufnahmeende und ein hinteres, von dem Aufnahmemittel abgekehrtes Abgabeende aufweist, einen Übergabeförderer, der ein vorderes, an das Abgabeende des Aufnahmeförderers anschließendes Übernahmeende und ein hinteres Übergabeende aufweist, und einen Abförderer, der mit einem Kopfende an das Übergabeende des Übergabeförderers anschließt, umfassen, wobei der Übergabeförderer um eine horizontale, quer zu seiner Förderrichtung an dem Übergabeende benachbart zu dem Kopfende des Abförderers angeordnete erste Schwenkachse verschwenkbar gehalten ist, und der Aufnahmeförderer um eine horizontale, quer zu seiner Förderrichtung an dem Abgabeende benachbart zu dem Übernahmeende des Übernahmeförderers angeordnete zweite Schwenkachse verschwenkbar gehalten ist. Die erste und zweite Schwenkachse ist zweckmäßigerweise parallel zu der Kippachse angeordnet, in Aufnahme- oder Kippstellung des Aufnahmemittels.

Insbesondere kann vorgesehen sein, dass der Aufnahmeförderer und der Übergabeförderer durch Schwenken um die erste und die zweite Schwenkachse in mindestens eine Annahmestellung bringbar sind, in der sich eine Förderoberfläche des Übergabeförderers im Wesentlichen waagerecht oder unter einem Winkel von höchstens 10°, 20° oder 30° zur Horizontalen befindet, von der ersten Schwenkachse aus abfallend, und sich die Förderoberfläche des Aufnahmeförderers im Wesentlichen vertikal oder unter einem Winkel von bevorzugt höchstens 5° oder 10° zur Vertikalen unter der ersten Schwenkachse befindet, oder in mindestens eine Entladestellung bringbar sind, in der die Förderoberfläche des Aufnahmeförderers in Richtung auf das Aufnahmeende bezüglich der Vertikalen unter einem größeren Winkel geneigt ist als in der Annahmestellung.

Zweckmäßigerweise ist die Förderoberfläche des Abzugsförderers ausgehend von einer Annahmestellung, in der sich die Förderoberfläche vertikal oder unter einem Winkel von bis zu 5°, 10°, 20° oder 30° zur Vertikalen befindet, in einer vorgegebenen Abhängigkeit von oder gleichzeitig mit einer Kippstellung des Aufnahmemittels in ihrer Neigung verstellbar.

Es kann vorgesehen sein, dass die Entladevorrichtung und das Kippgerät auf einem gemeinsamen Maschinengestell angeordnet sind, das mittels einer Fahreinheit auf einem Untergrund gesteuert verfahrbar ist.

Der Übergabeförderer ist an dem Übernahmeende bevorzugt breiter als an dem Übergabeende und mit mindestens einem, insbesondere in der Draufsicht rechteckigen, dreieck- oder trapezförmigen, zum Übergabeende hin verjüngt zulaufenden seitlichen Förderelement versehen, beispielsweise einem Rollenförderer.

Der Aufnahmeförderer kann mehrere parallel nebeneinander angeordnete Aufnahmeförderelemente aufweisen, die unabhängig voneinander antreibbar, reversierbar, teleskopierbar oder passiv längenanpassbar sein können.

Der Übergabeförderer kann mehrere parallel nebeneinander angeordnete Übergabeförderelemente aufweisen, die unabhängig voneinander antreibbar und reversierbar sein können.

Benachbart zu dem Abzugsförderer, insbesondere benachbart zu dem Abförderer und/oder dem Übergabeförderer, können Seitenwangen angeordnet sein, die insbesondere vertikal angeordnet und teleskopierbar sowie um eine vertikale Schwenkachse nach innen (zueinander) oder außen (voneinander weg) klappbar sein können.

Außerhalb von und benachbart zu einer Seitenwange kann eine Arbeitsplattform für eine Bedienungsperson angeordnet sein.

Die Aufgabe der Erfindung wird weiterhin gelöst durch ein Verfahren zum Entladen eines Rollbehälters oder eines Wechselbehälters unter Verwendung einer erfindungsgemäßen Vorrichtung, wobei zum Entladen eines Rollbehälters das Kippgerät in die Aufnahmestellung gebracht wird, ein beladener Rollbehälter auf das Aufnahmemittel gebracht und vorzugsweise arretiert wird, der Rollbehälter mittels der Kippeinrichtung in Richtung der Entladevorrichtung gekippt wird und mittels der Entladevorrichtung entladen wird, und wobei zum Entladen eines Wechselbehälters das Kippgerät in die Ruhestellung gebracht wird, der Wechselbehälter in dem Wechselbehälter-Entladebereich positioniert wird und mittels der Entladevorrichtung entladen wird.

Wenn die Entladevorrichtung als Abzugsförderer ausgebildet ist, wird zum Entladen eines Rollbehälters in einem ersten Schritt die Vorrichtung in eine Ausgangsstellung mit in Aufnahmestellung befindlichem Aufnahmemittel und in einer Annahmestellung befindlichem Abzugsförderer gebracht, in einem zweiten Schritt ein beladener Rollbehälter auf das Aufnahmemittel gebracht, und in einem dritten Schritt der Rollbehälter mittels der Kippeinrichtung in Richtung des Abzugsförderers gekippt, wobei die Entladeöffnung des Rollbehälters in Anlage gegen oder über eine Förderoberfläche des Abzugsförderers gekippt wird.

Vorzugsweise wird im ersten Schritt die Förderoberfläche des Abzugsförderers, insbesondere die Förderoberfläche des Aufnahmeförderers, als eine Annahmestellung vertikal oder bis zu einem Neigungswinkel von höchstens 10°, 20° oder 30° zur Vertikalen geneigt ausgerichtet.

Bevorzugt wird im dritten Schritt die Förderoberfläche des Abzugsförderers, insbesondere die Förderoberfläche des Aufnahmeförderers, bis zu einem Neigungswinkel von 10°, 20°, 30°, 40°, 50°, 60° oder mehr zur Vertikalen geneigt. Der Rollbehälter kann im dritten Schritt um einen gleichen Neigungswinkel zur Vertikalen wie die Förderoberfläche des Abzugsförderers oder Aufnahmeförderers geneigt werden, wobei die Entladeöffnung parallel zu der Förderoberfläche des Abzugsförderers, insbesondere des Aufnahmeförderers ist, oder um einen kleineren Neigungswinkel. Diese Neigevorgänge können zeitlich überlagert ausgeführt werden.

Im zweiten und dritten Schritt befindet sich die Entladeöffnung des Rollbehälters zweckmäßigerweise unmittelbar benachbart zu der Förderoberfläche des Abzugsförderers, so dass keine Gegenstände aus dem Rollbehälter zwischen seitlichen Rändern der Entladeöffnung und der Förderoberfläche in einer seitlichen Richtung, quer zur Förderrichtung, hindurchgelangen können. Mit anderen Worten ist ein Abstand der seitlichen Ränder der Entladeöffnung von der Förderoberfläche bevorzugt kleiner als eine kleinste Abmessung von in dem Rollbehälter aufgenommenen Gegenständen bzw. Stückgutteilen. Mit fortschreitender Entladung kann die Förderoberfläche des Abzugs- bzw. Aufnahmeförderers bezüglich der Vertikalen einem größeren Neigungswinkel als der Rollbehälter aufweisen, so dass ein keilförmiger Zwischenraum zwischen der Entladeöffnung oder deren seitlichen Rändern und der Förderoberfläche entsteht und die Entladung begünstigt wird. Die aufwärts gerichtete Förderbewegung des Abzugsförderers im Bereich der Entladeöffnung begünstigt die Entladung von Stückgutteilen aus dem Rollbehälter.

Damit die Vorrichtung problemlos wahlweise entweder zum Entladen von Rollbehältern oder zum Entladen von Wechselbehältern genutzt werden kann, ist das Kippgerät so eingerichtet, dass das Aufnahmemittel in seiner Ruhestellung eine Entladung eines Wechselbehälters nicht behindert und außerhalb eines Wechselbehälter-Entladebereichs angeordnet ist. Beispielsweise kann vorgesehen sein, dass das Aufnahmemittel in der Ruhestellung in den Untergrund, auf dem die Kippvorrichtung steht, versenkbar ist, oder vollständig seitlich oder oberhalb des Abzugsförderers angeordnet werden kann, so dass der Wechselbehälter-Entladebereich ungehindert zur Positionierung eines Wechselbehälters zur Verfügung steht.

Beim Verschwenken des Aufnahmemittels zwischen der Ruhestellung und der Aufnahmestellung im dritten Schritt können die Bewegung des Kippgeräts und eine Bewegung des Abzugsförderers in die Annahmestellung zeitlich überlagert ausgeführt werden.

Die Erfindung wird nachfolgend anhand eines Ausführungsbeispiels der Vorrichtung und des Verfahrens erläutert, wobei auf eine Zeichnung Bezug genommen ist, in der
Fig. 1 eine perspektivische Ansicht einer erfindungsgemäßen Entladevorrichtung mit Kippgerät zum Entladen von Rollbehältern in einer Ruhestellung zeigt,
Fig. 2 die Vorrichtung nach Fig. 1 in einer Übergangsstellung zeigt,
Fig. 3 die Vorrichtung nach Fig. 1 in einer Aufnahmestellung zum Aufnehmen eines Rollbehälters zeigt,
Fig. 4 die Vorrichtung nach Fig. 1 mit einem auf einer Aufnahmeplattform aufgenommenen Rollbehälter zeigt,
Fig. 5 die Vorrichtung nach Fig. 4 mit gekipptem Rollbehälter zeigt und
Fig. 6 eine ähnliche Stellung wie Fig. 5 zeigt, in der der Aufnahmeförderer stärker zur Vertikalen geneigt ist als in der Stellung nach Fig. 5 und stärker als der Rollbehälter.

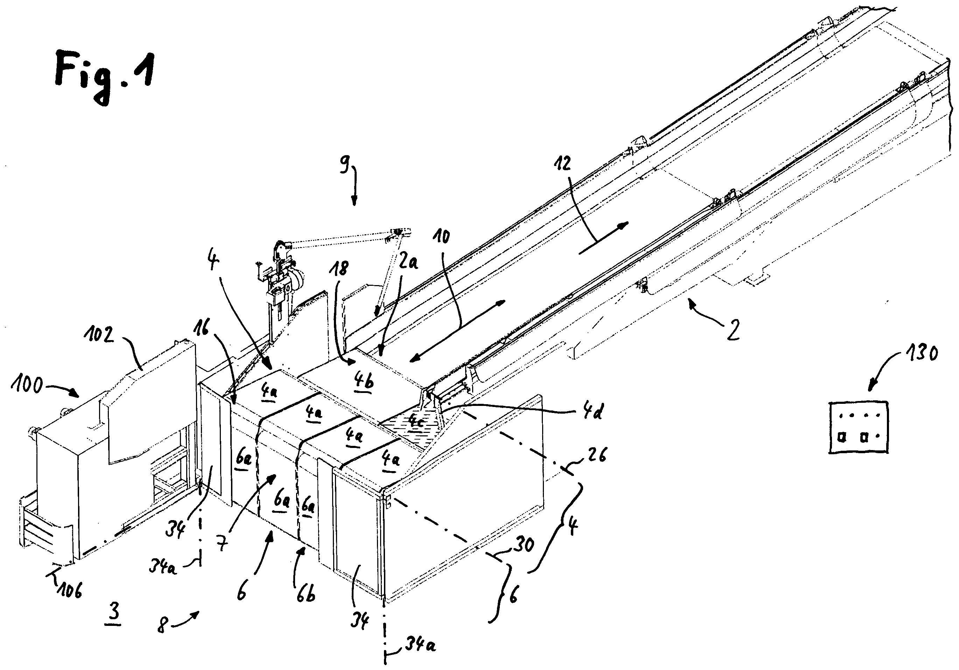

Fig. 1 bis 3 dienen zunächst der grundsätzlichen Erläuterung des Aufbaus des Kippgeräts und des diesem zugeordneten Abzugsförderers als Entladevorrichtung. Der Abzugsförderer könnte durch einen einzigen Rollen- oder Bandförderer gebildet sein, ist jedoch in diesem Ausführungsbeispiel aus mehreren einzelnen Förderern zusammengesetzt, und zwar aus einem Abförderer 2, der in dem dargestellten Beispiel als Teleskopförderer ausgebildet ist, einem Übergabeförderer 4 und einem Aufnahmeförderer 6, die jeweils unmittelbar aneinander anschließend angeordnet sind. Etwaige Abstände oder Lücken zwischen dem Abförderer und dem Übergabeförderer bzw. dem Übergabeförderer und dem Aufnahmeförderer sind zumindest kleiner als eine kleinste Abmessung von zu entladenden Stückgutteilen, beispielsweise kleiner als 10 cm, 5 cm, 3 cm, 2 cm oder 1 cm, so dass keine Stückgutteile dazwischen hindurchfallen können. Die einzelnen Förderer können an einem gemeinsamen Maschinengestell angeordnet und durch dieses fest miteinander verbunden sein, oder sie können unabhängig voneinander als Einzelförderer angeordnet sein, deren Position sich je nach Bedarf verändern lässt. Vorzugsweise sind Abförderer 2, Übergabeförderer 4 und Aufnahmeförderer 6 als eine Einheit an einem gemeinsamen Maschinengestell angeordnet, das auf einer antreib- und steuerbaren Fahreinheit getragen sein kann, die eine Verfahrbarkeit des Abzugsförderers auf einem Untergrund 3 entlang und quer zu einer Längsrichtung 10, die mit einer Förderrichtung 12 des Abzugsförderers übereinstimmt, zulässt.

Der Abförderer 2 ist als Teleskopförderer ausgebildet, wobei lediglich ein Kopfende 2a und ein daran anschließender Anfangsbereich des Abförderers 2 dargestellt ist, nicht hingegen ein dem Kopfende 2a gegenüberliegendes Abgabeende, an dem geförderte Stückgutteile zur weiteren Verarbeitung abgegeben werden. Bei ortsfest fixiertem Abgabeende können das Kopfende 2a des Abförderers 2 und der Übergabeförderer 4 in Längsrichtung 10 vor- und zurückbewegt werden, ohne dass der Abförderweg unterbrochen wird. Beispielsweise kann das Kopfende 2a des Abförderers 2 zum Entladen eines Wechselbehälters oder sonstigen Behälters oder Containers, der mit Stückgütern beladen ist, unter Mitnahme des Übergabeförderers 4 und des Aufnahmeförderers 6 entgegen der Förderrichtung 12 bis in Kontakt mit aufgestapelten oder aufgehäuften Stückgütern vorgeschoben werden. Alternativ kann der Aufnahmeförderer 6 in der in Fig. 1 dargestellten Anordnung in Kontakt mit oder in unmittelbare Nähe eines Kippgeräts 100 bewegt werden, das in noch zu erläuternder Weise der Entladung von Rollbehältern dient.

Der Übergabeförderer 4 ist in der dargestellten Ausführungsform mehrfach unterteilt und besteht aus vier nebeneinander angeordneten Übergabeförderelementen in Form von Bandförderern mit Förderbändern 4a, einem nachgeordneten weiteren Bandförderer mit Förderband 4b sowie einer seitlich angeordneten Rollenbahn 4c, die eine im Wesentlichen dreieck- oder trapezförmige Förderoberfläche bildet. Die Rollenbahn 4c hat schräg zur Längsrichtung 10 angeordnete Rollen, um eine zu einer vertikalen Längsmittelebene des Abförderers 2 gerichtete Förderkomponente zu erzielen. An einem äußeren Rand der Rollenbahn 4c ist ein seitliches Leitblech 4d angeordnet, um transportierte Stückgutteile in Richtung des Abförderers 2 zu leiten.

Abförderer 2 und Übergabeförderer 4 können sich horizontal oder schräg geneigt erstrecken, wobei ein Winkel von bis zu 30° zur Horizontalen vorteilhaft ist.

In der in Fig. 1 bis 3 dargestellten Annahme- oder Ausgangsstellung ist der Aufnahmeförderer 6 oder dessen Förderoberfläche 7 jeweils vertikal oder unter maximal 10°, 20° oder 30° zur Vertikalen angeordnet und erstreckt sich von einem vorderen Übernahmeende des Übergangsförderers 4 vertikal oder schräg nach unten bis knapp über den Untergrund 3, beispielsweise 1 mm bis 10 mm darüber. In dem dargestellten Ausführungsbeispiel besteht der Aufnahmeförderer 6 aus einer Reihe von nebeneinander angeordneten einzelnen Aufnahmeförderelementen, beispielsweise Gurtförderern mit Förderbändern 6a, wobei jedes Förderband 6a aktiv oder passiv längenanpassbar ist. Bei passiver Längenanpassbarkeit verkürzt sich das Förderband 6a bei einer entsprechenden, gegen ein vorderes Aufnahmeende 6b des Aufnahmeförderers 6 wirkenden Kraft gegen den Druck einer Rückstellfeder und verlängert sich bei Wegfall der Kraft wieder bis auf seine Ausgangslänge.

Der Übergabeförderer 4 ist an einem Übergabeende 18 um eine erste Schwenkachse 26, die horizontal und quer zur Förderrichtung 12 benachbart zum Kopfende 2a des Abförderers 2 angeordnet ist, verschwenkbar gehalten und somit in seinem vorderen Bereich, insbesondere mit seinem Übernahmeende 16, höhenverstellbar. Der Aufnahmeförderer 6 ist um eine zweite Schwenkachse 30, die benachbart zu und insbesondere an dem Übernahmeende 16 des Übergabeförderers 4 horizontal und quer zur Förderrichtung 12 angeordnet ist, höhenverschwenkbar, so dass das Aufnahmeende 6b des Aufnahmeförderers 6 unabhängig von einer Höhenverstellung des Übernahmeendes des Übernahmeförderers 4 verschwenkbar und höhenverstellbar ist.

Bei Ausführung des Übergabeförderers 4 als Band- oder Rollenförderer verläuft die erste Schwenkachse 26 bevorzugt durch eine am Übergabeende 18 angeordnete Antriebs- oder Umlenkrolle des Übergabeförderers 4 oder durch eine benachbarte Umlenkrolle des Abförderers 2. Die zweite Schwenkachse 30 verläuft bei Ausbildung des Aufnahmeförderers 6 als Band- oder Rollenförderer bevorzugt durch eine an einem Abgabeende angeordnete Antriebs- oder Umlenkrolle des Aufnahmeförderers 6, oder durch eine am Übernahmeende 16 des Übergabeförderers 4 angeordnete Antriebs- oder Umlenkrolle.

Neben dem Abförderer 2 und Übergabeförderer 4 sind Seitenwangen vorgesehen, um zu verhindern, dass einzelne Stückgüter seitlich von den Förderern herabfallen können. Insbesondere sind verstellbare Seitenwangen 34 vorgesehen, die um eine vertikale Schwenkachse 34a in unterschiedliche Stellungen geklappt werden können. In der in Fig. 1 dargestellten, an den Aufnahmeförderer 6 angeklappten Stellung decken die Seitenwangen 34 einen Teil der Breite des Aufnahmeförderers 6 ab und lassen in dem nicht abgedeckten Teil in noch zu erläuternder Weise die Anlage und Entleerung eines Rollbehälters zu. In einer geöffneten Stellung, in der die Seitenwangen 34 gegenüber Fig. 1 um 90° oder mehr, beispielsweise 180° oder 270° verschwenkt sind und etwa parallel oder quer zur Längsrichtung 10 stehen, können beispielsweise Wechselbehälter oder andere Transportbehälter oder Container, deren Entladeöffnung breiter ist als die des Rollbehälters 109, entladen werden.

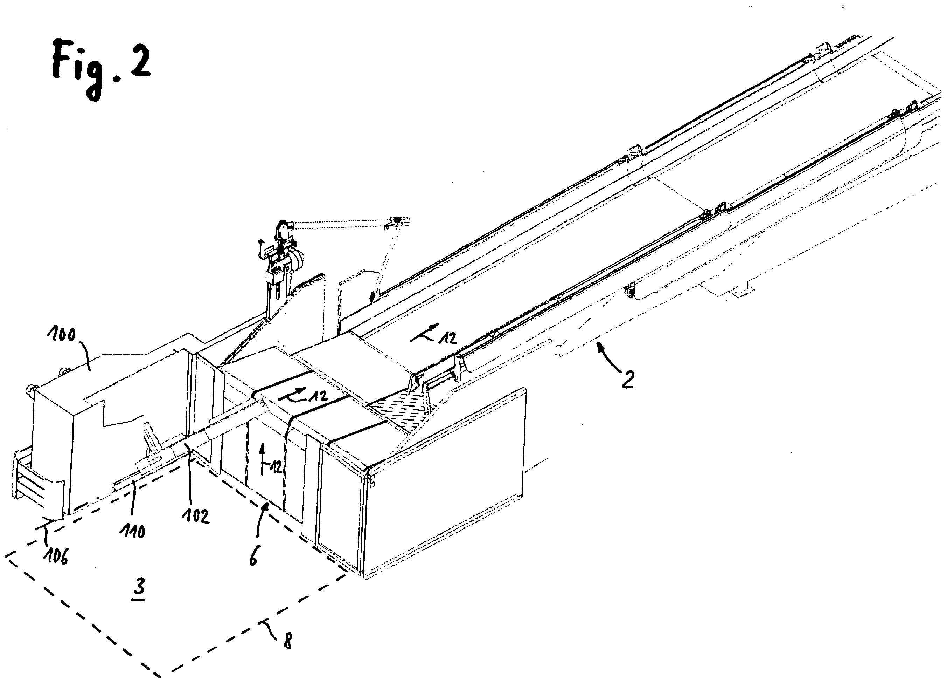

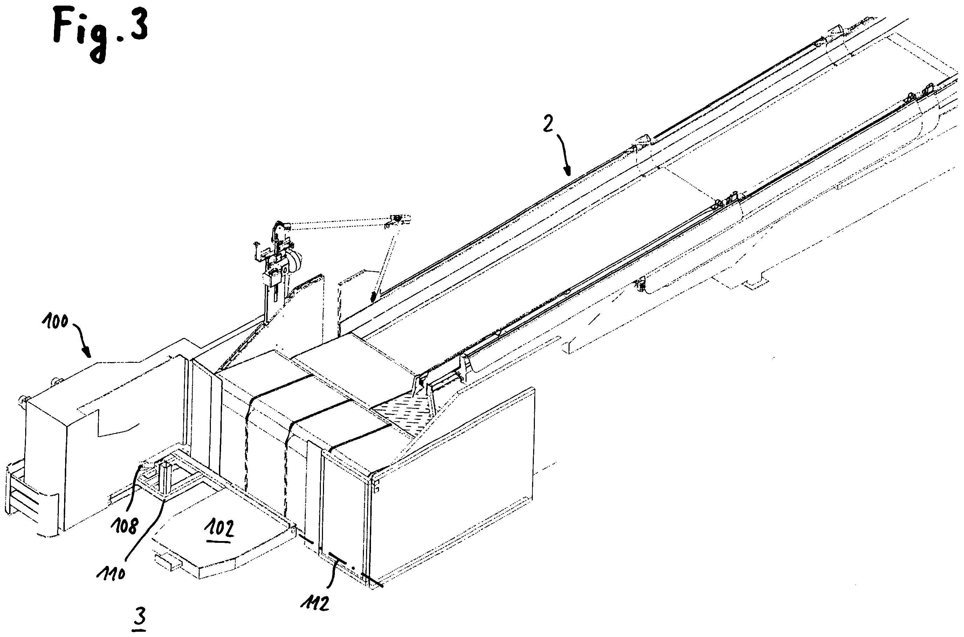

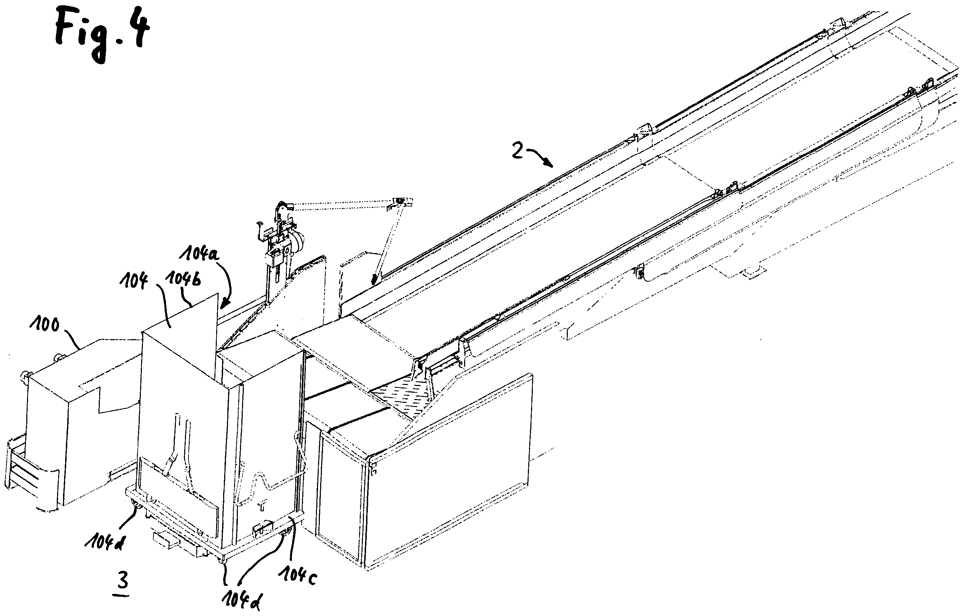

Das Kippgerät 100 weist eine in verschiedenen Richtungen schwenkbare Aufnahmeplattform 102 als Aufnahmemittel zum Aufnehmen eines Rollbehälters 104 (Fig. 4 bis 6) auf. Die Aufnähmeplattform 102 ist um eine horizontale Schwenkachse 106 an dem Kippgerät 100 schwenkbar gehalten und kann durch eine Schwenkeinrichtung 108 ausgehend von einer vertikalen Ruhestellung (Fig. 1) in eine horizontale Aufnahmestellung (Fig. 3) geschwenkt werden, wobei Zwischenstellungen etwa wie in Fig. 2 dargestellt durchlaufen werden. Die Schwenkeinrichtung ist in dem dargestellten Ausführungsbeispiel durch eine hydraulische Kolben-/Zylindereinheit 108 gebildet, die an einem Schwenkrahmen 110 angreift, der um die Schwenkachse 106 schwenkbar gelagert ist und an einem Ende die Aufnahmeplattform 102 trägt.

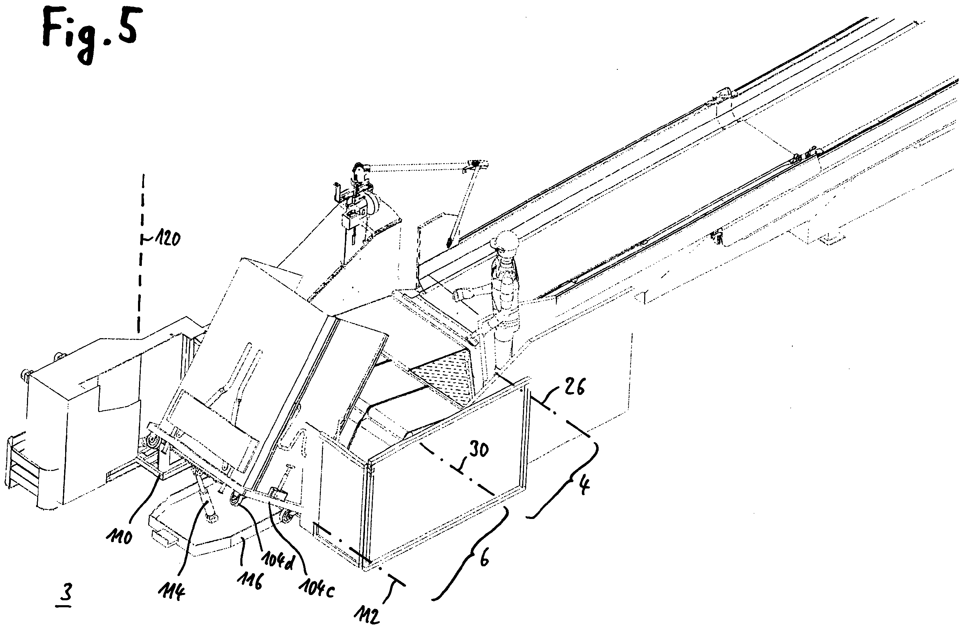

Die Aufnahmeplattform 102 ist weiterhin um eine Kippachse 112 ausgehend von einer horizontalen Aufnahmestellung in eine geneigte Kippstellung kippbar, wie es in Fig. 5 dargestellt ist. Die Kippachse 112 ist an dem Schwenkrahmen 110 gehalten und wird von der Schwenkeinrichtung 108 aus der Ruhestellung, in der die Kippachse 112 vertikal ausgerichtet ist, in die Aufnahmestellung gebracht, in der sie horizontal ausgerichtet ist.

Der Kippvorgang der Aufnahmeplattform 102 erfolgt durch eine Kippeinrichtung 114, die in dem dargestellten Ausführungsbeispiel durch eine Kolben-/Zylindereinheit gebildet ist, die einerseits an der Aufnahmeplattform 102 und andererseits an einer Bodenplatte 116 des Schwenkrahmens 110 angelenkt ist. Die Bodenplatte 116 befindet sich in der Aufnahmestellung auf oder unmittelbar oberhalb des Untergrunds 3 und kann sich bei Betätigung der Kippeinrichtung und Belastung durch einen aufgenommenen Rollbehälter auf dem Untergrund abstützen, ohne dass die Schwenkeinrichtung belastet wird.

Die Aufnahmeplattform 102 befindet sich in ihrer horizontalen Aufnahmestellung auf oder dicht über dem Untergrund 3, so dass ein zu entladender Rollbehälter 104 (Fig. 4) über die Aufnahmeplattform gerollt werden kann. Bevorzugt weist das Kippgerät bzw. die Aufnahmeplattform ein Mittel zum Zentrieren des Rollbehälters 104 in einer bestimmten Stellung relativ zu der Aufnahmeplattform auf, beispielsweise einen oder mehrere Anschläge, gegen den oder die der Rollbehälter 104 bewegt wird. Weiterhin kann die Aufnahmeplattform mit einem Fixierungsmittel zum vorübergehenden Fixieren des Rollbehälters an der Aufnahmeplattform versehen sein, beispielsweise mit einem oder mehreren mechanischen Fixierungselementen, die betätigt werden, wenn sich der Rollbehälter in einer bestimmten, zentrierten Stellung über der Aufnahmeplattform befindet, oder sobald die Aufnahmeplattform gekippt wird.

Bei dem Fixierungsmittel kann es sich um Eingreif- oder Rastmittel, eine magnetische Haltevorrichtung oder ähnliches handeln. Beispielsweise kann vorgesehen sein, dass die Aufnahmeplattform zumindest an einer Seite über den Rollbehälter vorsteht und mit einem ausfahr- oder ausklappbaren Anschlag versehen ist, mit dem der Rollbehälter relativ zu der Aufnahmeplattform fixiert oder in zumindest einer Richtung unverschieblich auf der Aufnahmeplattform gehalten wird.

Alternativ kann das Fixierungsmittel durch eine an dem Rollbehälter selbst angeordnete Feststelleinrichtung gebildet sein, mit der eine Immobilisierung des Rollbehälters auf einem ebenen Untergrund bewirkt werden kann. Die Feststelleinrichtung kann durch einen oder mehrere Stempel gebildet sein, die vertikal gegen den Untergrund ausfahrbar sind und mit denen der Rollbehälter festgestellt oder sogar von seinen Rollen abgehoben werden kann. Als Alternative können die Rollen des Rollbehälters einfahrbar oder einklappbar sein.

Vor dem Abzugsförderer 2, 4, 6, hier vor dem Aufnahmeförderer 6, befindet sich ein Wechselbehälter-Entladebereich 8, der in Fig. 2 mit rechteckigem Grundriss dargestellt ist. In dem Wechselbehälter-Entladebereich kann, sobald sich das Aufnahmemittel 102 in Ruhestellung befindet, ein zu entladender Wechselbehälter positioniert werden.

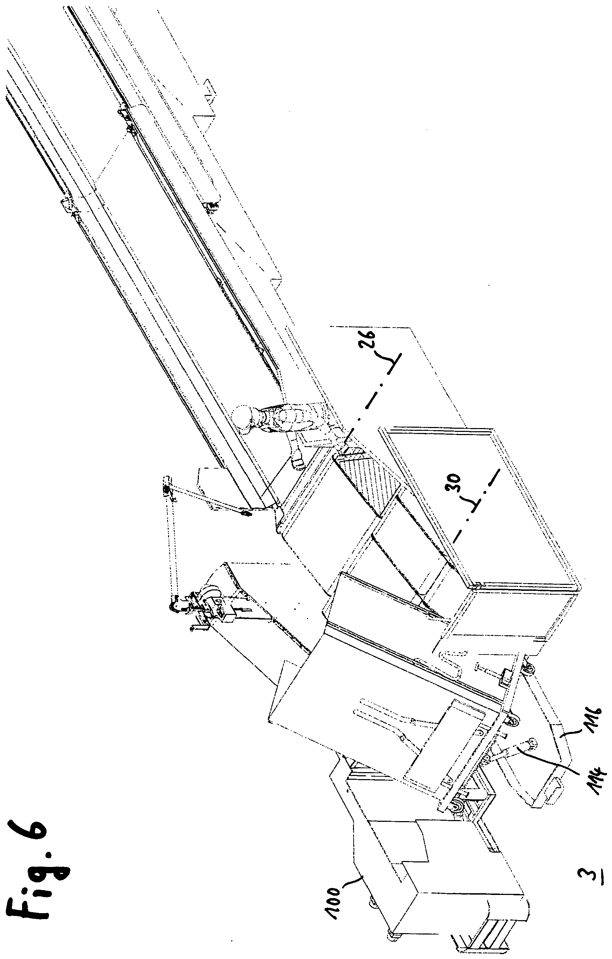

Fig. 5 und 6 erläutern den Kippvorgang eines auf der Aufnahmeplattform 102 aufgenommenen Rollbehälters 104. Der Rollbehälter 104 weist eine Entladeöffnung 104a auf, die in Figur 4 bis 6 erkennbar ist. Die dort dargestellte Entladeöffnung 104a hat eine Größe, die im Wesentlichen der Größe einer Seitenwand des Rollbehälters entspricht. Sie erstreckt sich von einer Oberkante 104b des Rollbehälters bis zu dessen Boden 104c, an dem Rollen 104d angebracht sind.

Um zu vermeiden, dass aus der Entladeöffnung 104a des Rollbehälters 104 einzelne oder kleinere Stückgutteile seitlich oder nach außen zwischen dem Rand der Entladeöffnung und dem Aufnahmeförderer 6 herausfallen, wird der Rollbehälter 104 gekippt, während bevorzugt gleichzeitig der Aufnahmeförderer 6 ausgehend von der in Fig. 1 bis 4 dargestellten, im Wesentlichen senkrechten Ausgangsstellung in eine schräg geneigte Entladestellung gebracht wird, durch Schwenken des Aufnahmeförderers 6 um die zweite Schwenkachse 30. Eine günstige Entladestellung des Aufnahmeförderers 6 ist dadurch gegeben, dass die Neigung des Aufnahmeförderers 6 oder der Winkel von dessen Förderoberfläche 7 zur Vertikalen 120 stets im Wesentlichen mit der Neigung oder dem Winkel zur Vertikalen des Rollbehälters 104 in Bezug auf die Kippachse 112 übereinstimmt oder größer ist als diese. Im letztgenannten Fall entsteht ein etwa keilförmiger Abstandsbereich oder Zwischenraum zwischen der Entladeöffnung und der Förderoberfläche des Aufnahmeförderers 6.

Unabhängig von der Neigung des Aufnahmeförderers 6 zur Vertikalen, aber bevorzugt gleichzeitig mit dessen Neigungsverstellung, kann auch der Übergabeförderer 4 um die erste Schwenkachse 26 in eine gewünschte Neigung oder einen gewünschten Winkel zur Vertikalen gebracht werden, was in Fig. 6 im Unterschied zu Fig. 5 dargestellt ist. Während der Übergabeförderer 4 in der in Fig. 5 dargestellten Position im Wesentlichen horizontal ausgerichtet ist, nimmt der Übergabeförderer 4 gemäß Fig. 6 eine in Förderrichtung ansteigende oder in Richtung auf den Aufnahmeförderer 6 bzw. den Rollbehälter 104 abwärts geneigte Stellung ein, mit einem Neigungswinkel zur Vertikalen, der beispielsweise bis zu 60°, 70° oder 80° betragen kann. Auf diese Weise kann sichergestellt werden, dass das Aufnahmeende 6b des Aufnahmeförderers 6 auch bei einer Neigungsverstellung des Aufnahmeförderers in einer gewünschten Höhe über dem Untergrund 3 bleibt, bspw. unmittelbar darüber oder in einem bestimmten maximalen Abstand davon, etwa 1 cm, 5 cm, 10 cm oder 20 cm, in Abhängigkeit von der Größe der zu entladenen Stückgutteile. Erfindungsgemäss ist vorgesehen, dass das Kippgerät 100 und der Abzugsförderer, insbesondere in Form von Aufnahmeförderer 6, Übergabeförderer 4 und Abförderer 2, steuerungstechnisch miteinander verknüpft und mit einer zentralen Bedieneinheit 130 verbunden sind, so dass eine Bedienungsperson von einem zentralen Ort aus die Funktionen des Kippgeräts und des Abzugsförderers über in Fig. 1 nicht näher dargestellte Steuerleitungen steuern kann.

### Bezugszeichenliste

- 2: Abförderer
- 2a: Kopfende
- 3: Untergrund
- 4: Übergabeförderer
- 4a: Förderband
- 4b: weiteres Förderband
- 4c: Rollenbahn
- 4d: Leitblech
- 6: Aufnahmeförderer
- 6a: Förderband (Aufnahmeförderelement)
- 6b: Aufnahmeende
- 7: Förderoberfläche
- 8: Wechselbehälter-Entladebereich
- 9: Entladevorrichtung
- 10: Längsrichtung
- 12: Förderrichtung
- 16: Übernahmeende
- 18: Übergabeende
- 26: erste Schwenkachse
- 30: zweite Schwenkachse
- 34: Seitenwange
- 34a: vertikale Schwenkachse
- 100: Kippgerät
- 102: Aufnahmemittel (Aufnahmeplattform)
- 104: Rollbehälter
- 104a: Entladeöffnung
- 104b: Oberkante
- 104c: Boden
- 104d: Rolle
- 106: Schwenkachse
- 108: Schwenkeinrichtung
- 110: Schwenkrahmen
- 112: Kippachse
- 114: Kippeinrichtung
- 116: Bodenplatte
- 120: Vertikale
- 130: Bedienstation

## Patentansprüche

1. Vorrichtung zum Entladen eines Rollbehälters oder eines Wechselbehälters, mit einer Entladevorrichtung (9) und einem benachbarten Wechselbehälter-Entladebereich (8), in dem ein zu entladender Wechselbehälter positionierbar ist, und mit einem Kippgerät (100) zum Aufnehmen und Kippen eines beladenen Rollbehälters (104), wobei das Kippgerät benachbart zu der Entladevorrichtung (9) angeordnet ist und mit einem Aufnahmemittel (102) versehen ist, das in eine Ruhestellung, in der sich das Kippgerät (100) und das Aufnahmemittel (102) außerhalb des Wechselbehälter-Entladebereichs (8) befinden, und in eine Aufnahmestellung, in der sich das Aufnahmemittel (102) in dem Wechselbehälter-Entladebereich (8) befindet, bringbar ist, wobei das Aufnahmemittel in der Aufnahmestellung zum Aufnehmen eines eine seitliche Entladeöffnung (104a) aufweisenden Rollbehälters (104) eingerichtet und in eine Kippstellung kippbar ist, in der in dem Rollbehälter (104) aufgenommene Stückgüter schwerkraftbedingt selbsttätig aus der Entladeöffnung (104a) des Rollbehälters (104) zu der Entladevorrichtung (9) gelangen, und wobei in der Ruhestellung des Aufnahmemittels ein Wechselbehälter in dem Wechselbehälter-Entladebereich (8) positionierbar und mittels der Entladevorrichtung (9) entladbar ist, wobei das Kippgerät (100) und die Entladevorrichtung (2, 4, 6) steuerungstechnisch verknüpft und von einer zentralen Bedienstation (130) aus steuerbar sind.

2. Vorrichtung nach Anspruch 1, **dadurch gekennzeichnet, dass** das Kippgerät (100) mit einer Schwenkeinrichtung (108), mit der das Aufnahmemittel (102) aus der Ruhestellung um eine Schwenkachse (106) in die Aufnahmestellung, in der ein Rollbehälter (104) auf einem Untergrund (3) über das Aufnahmemittel (102) rollbar ist, schwenkbar ist, und mit einer Kippeinrichtung (114), mit der das Aufnahmemittel (102) zusammen mit dem Rollbehälter (104) aus der Aufnahmestellung um eine horizontale Kippachse (112) in die Kippstellung kippbar ist.

3. Vorrichtung nach Anspruch 1 oder 2, **dadurch gekennzeichnet, dass** die Schwenkachse (106) senkrecht zu der Kippachse (112) angeordnet ist.

4. Vorrichtung nach Anspruch 1, 2 oder 3, **dadurch gekennzeichnet, dass** die Schwenkachse (106) horizontal angeordnet ist.

5. Vorrichtung nach einem der vorangehenden Ansprüche, **dadurch gekennzeichnet, dass** das Aufnahmemittel in der Ruhestellung vertikal angeordnet ist.

6. Vorrichtung nach einem der vorstehenden Ansprüche, **dadurch gekennzeichnet, dass** das Aufnahmemittel (102) mit einem Mittel zum Fixieren des Rollbehälters (104) an dem Aufnahmemittel (102) versehen ist.

7. Vorrichtung nach einem der vorangehenden Ansprüche, **dadurch gekennzeichnet, dass** das Kippgerät ein auf einem Untergrund (3) stehendes oder fahrbares Maschinengestell mit einer Steuereinheit aufweist, wobei die Schwenkeinrichtung (108) und die Kippeinrichtung (114) an dem Maschinengestell gehalten und mittels der Steuereinheit zur Bewegung des Aufnahmemittels (102) zwischen der Ruhestellung, der Aufnahmestellung und einer Kippstellung steuerbar sind.

8. Vorrichtung nach einem der vorstehenden Ansprüche, **dadurch gekennzeichnet, dass** die Kippeinrichtung (114) an dem Aufnahmemittel angeordnet ist und zusammen mit diesem um die Schwenkachse (106) aus der Ruhestellung in die Aufnahmestellung schwenkbar ist.

9. Vorrichtung nach einem der vorangehenden Ansprüche, **dadurch gekennzeichnet, dass** die Entladevorrichtung einen Abzugsförderer (2, 4, 6) umfasst , in Richtung dessen Förderoberfläche (7) die Entladeöffnung (104a) des Rollbehälters (104) kippbar ist.

10. Vorrichtung nach Anspruch 9, **dadurch gekennzeichnet, dass** der Abzugsförderer einen Aufnahmeförderer (6) mit einer Förderoberfläche (7), der ein in Richtung des Aufnahmemittels (102) frei vorstehendes Aufnahmeende (6b) und ein hinteres, von dem Außnahmemittel (102) abgekehrtes Abgabeende (6c) aufweist, einen Übergabeförderer (4), der ein vorderes, an das Abgabeende (6c) des Aufnahmeförderers (6) anschließendes Übernahmeende (16) und ein hinteres Übergabeende (18) aufweist, und einen Abförderer (2), der mit einem Kopfende (2a) an das Übergabeende (18) des Übergabeförderers (4) anschließt, umfasst, wobei der Übergabeförderer (4) um eine horizontale, quer zu seiner Förderrichtung (12) an dem Übergabeende (18) benachbart zu dem Kopfende (2a) des Abförderers (2) angeordnete erste Schwenkachse (26) verschwenkbar gehalten ist, und der Aufnahmeförderer (6) um eine horizontale, quer zu seiner Förderrichtung (12) an dem Abgabeende (6c) benachbart zu dem Übernahmeende (16) des Übernahmefförderers (4) angeordnete zweite Schwenkachse (30) verschwenkbar gehalten ist.

11. Vorrichtung nach Anspruch 10, **dadurch gekennzeichnet, dass** der Aufnahmeförderer (6) und der Übergabeförderer (4) durch Schwenken um die erste und die zweite Schwenkachse (26, 30) in eine Annahmestellung bringbar sind, in der sich eine Förderoberfläche des Übergabeförderers (4) im Wesentlichen waagerecht oder unter einem Winkel von höchstens 10°, 20° oder 30° zur Horizontalen befindet, von der ersten Schwenkachse (26) aus abfallend, und sich die Förderoberfläche (7) des Aufnahmeförderers (6) im Wesentlichen vertikal oder unter einem Winkel von höchstens 5°, 10° oder 20° zur Vertikalen unter der ersten Schwenkachse (26) befindet, oder in eine Entladestellung bringbar sind, in der die Förderoberfläche (7) des Aufnahmeförderers (6) in Richtung auf das Aufnahmeende (6b) des Aufnahmeförderers (6) bezüglich der Vertikalen unter einem größeren Winkel geneigt ist als in der Annahmestellung.

12. Vorrichtung nach einem der Ansprüche 9 bis 11, **dadurch gekennzeichnet, dass** die Förderoberfläche (7) des Abzugsförderers (2, 4, 6) ausgehend von einer Annahmestellung, in der sich die Förderoberfläche (7) vertikal oder unter einem Winkel von bis zu 5°, 10°, 20° oder 30° zur Vertikalen befindet, in einer vorgegebenen Abhängigkeit von oder gleichzeitig mit einer Kippbewegung des Aufnahmemittels (102) in ihrer Neigung verstellbar ist.

13. Vorrichtung nach einem der Ansprüche 1 bis 12, **dadurch gekennzeichnet, dass** die Entladevorrichtung (9) und das Kippgerät (100) auf einem gemeinsamen Maschinengestell angeordnet sind, das mittels einer Fahreinheit auf einem Untergrund (3) gesteuert verfahrbar sein kann.

14. Verfahren zum Entladen eines Rollbehälters oder eines Wechselbehälters unter Verwendung einer Vorrichtung nach einem der Ansprüche 1 bis 13, wobei zum Entladen eines Rollbehälters (104) das Kippgerät (100) in die Aufnahmestellung gebracht wird, ein beladener Rollbehälter (104) auf das Aufnahmemittel (102) gebracht wird, der Rollbehälter (104) mittels der Kippeinrichtung (100) in Richtung der Entladevorrichtung (9) gekippt wird und in dem Rollbehälter (104) aufgenommene Stückgüter auf die Entladevorrichtung (9) entladen werden, und wobei zum Entladen eines Wechselbehälters das Kippgerät (100) in die Ruhestellung gebracht wird, der Wechselbehälter in dem Wechselbehälter-Entladebereich positioniert und mittels der Entladevorrichtung entladen wird.

15. Verfahren nach Anspruch 14, **dadurch gekennzeichnet, dass** zum Entladen eines Rollbehälters (104) in einem ersten Schritt die Vorrichtung in eine Ausgangsstellung mit in Aufnahmestellung befindlichem Aufnahmemittel (102) und in einer Annahmestellung befindlichem Abzugsförderer (2, 4, 6) gebracht wird, in einem zweiten Schritt ein beladener Rollbehälter (104) auf das Aufnahmemittel (102) gebracht wird, und in einem dritten Schritt der Rollbehälter (102) mittels der Kippeinrichtung (114) in Richtung des Abzugsförderers (2, 4, 6) gekippt wird, wobei die Entladeöffnung (104a) des Rollbehälters (104) über eine Förderoberfläche (7) des Abzugsförderers (2, 4, 6) gekippt wird.

16. Verfahren nach Anspruch 15, **dadurch gekennzeichnet, dass** im dritten Schritt die Förderoberfläche (7) des Abzugsförderers (2,4,6), insbesondere des Aufnahmeförderers (6), in eine stärker gegenüber der Vertikalen (120) geneigte Stellung gebracht wird als der Rollbehälter (104).

## Claims

1. Device for unloading a roller container or a swap body, comprising an unloading device (9) and an adjacent swap body-unloading zone (8), in which a swap body to be unloaded can be positioned, and comprising a tilting device (100) to receive and tilt a loaded roller container (104), the tilting device being arranged adjacent to the unloading device (9) and being provided with a receiving means (102), which can be brought into a resting position, in which the tilting device (100) and the receiving means (102) are located outside the swap body-unloading zone (8) and into a receiving position, in which the receiving means (102) are located in the swap body-unloading zone (8), wherein the receiving means is installed in the receiving position to receive a roller container (104) having a lateral unloading opening (104a) and can be tilted into a tilt position, in which piece goods contained in the roller container (104) move automatically from the unloading opening (104a) of the roller container (104) to the unloading device (9) and wherein in the resting position of the receiving means a swap body can be positioned in the swap body-unloading zone (8) and can be unloaded by means of the unloading device (9), the tilting device (100) and the unloading device (2,4,6) being linked in terms of control-technology and controlled from a central control station (130).

2. Device according to claim 1, **characterized in that** the tilting device (100) comprising a pivot means (108), with which the receiving means (102) can be pivoted from the resting position about a pivot axis (106) into the receiving position, in which a roller container (104) on a base (3) can be rolled over the receiving means (102) and comprising a tilting system (114), with which the receiving means (102) together with the roller container (104) can be tilted from the receiving position about a horizontal tilting axis (112) into the tilting position.

3. Device according to claim 1 or 2, **characterized in that** the pivot axis (106) is arranged perpendicularly to the tilting axis (112).

4. Device according to claim 1, 2 or 3, **characterized in that** the pivot axis (106) is arranged horizontally.

5. Device according to any one of the above claims, **characterized in that** the receiving means is arranged vertically in the resting position.

6. Device according to any one of the above claims, **characterized in that** the receiving means (102) is provided with a means for securing the roller container (104) on the receiving means (102).

7. Device according to any one of the above claims, **characterized in that** the tilting device has a machine frame, which is mobile or stands on a base (3), comprising a control unit, wherein the pivot means (108) and the tilting device (114) are held on the machine frame and can be controlled by means of the control unit to move the receiving means (102) between the resting position, the receiving position and a tilting position.

8. Device according to any one of the above claims, **characterized in that** the tilting device (114) is arranged on the receiving means and together with this can be pivoted about the pivot axis (106) from the resting position into the receiving position.

9. Device according to any one of the above claims, **characterized in that** the unloading device comprises a discharge conveyor (2, 4, 6), in the direction of whose conveying surface (7) the unloading opening (104a) of the roller container (104) can be tilted.

10. Device according to claim 9, **characterized in that** the discharge conveyor has a receiving conveyor (6) comprising a conveying surface (7), which in the direction of the receiving means (102) has a freely protruding receiving end (6b) and a rear delivery end
(6c), turned away from the receiving means (102), a transfer conveyor (4), which has a front transfer end (16) joining the delivery end (6c) of the receiving conveyor (6) and a rear transfer end (18), and a discharge conveyor (2), which with a head end (2a) joins the delivery end (18) of the transfer conveyor (4), wherein the transfer conveyor (4) is pivotally held about a horizontal first pivot axis (26), arranged across its conveying direction (12) at the transfer end (18) adjacent to the head end (2a) of the discharge conveyor (2), and the receiving conveyor (6) is pivotally held about a horizontal second pivot axis (30), arranged across its conveying direction (12) at the delivery end (6c) adjacent to the transfer end (16) of the transfer conveyor (4).

11. Device according to claim 10, **characterized in that** the receiving conveyor (6) and the transfer conveyor (4) by pivoting about the first and second pivot axis (26, 30) can be brought into an acceptance position, in which a conveyor surface of the transfer conveyor (4) essentially lies horizontally or at an angle of maximum 10°, 20° or 30° to the horizontal, sloping from the first pivot axis (26), and the conveying surface (7) of the receiving conveyor (6) essentially lies vertically or at an angle of maximum 5°, 10° or 20° to the vertical under the first pivot axis (26), or can be brought into an unloading position, in which the conveying surface (7) of the receiving conveyor (6) in a direction towards the receiving end (6b) of the receiving conveyor (6) is inclined at an angle greater than in the acceptance position relative to the vertical.

12. Device according to any one of claims 9 to 11, **characterized in that** the conveying surface (7) of the discharge conveyor (2, 4, 6), starting from an acceptance position in which the conveying surface (7) lies vertically or at an angle of up to 5°, 10°, 20° or 30° to the vertical, can be adjusted in its inclination with a predefined dependence on or at the same time as a tilting movement of the receiving means (102).

13. Device according to any one of claims 1 to 12, **characterized in that** the unloading device (9) and the tilting device (100) are arranged on a common machine frame, which can be displaced by means of a driving unit on a base (3) in a controlled way.

14. Method for unloading a roller container or a swap body using a device according to any one of claims 1 to 13, wherein to unload a roller container (104) the tilting device (100) is brought into the receiving position, a loaded roller container (104) is brought onto the receiving means (102), the roller container (104) is tilted towards the unloading device (9) by means of the tilting device (100) and piece goods contained in the roller container (104) are unloaded onto the unloading device (9) and wherein to unload a swap body the tilting device (100) is brought into the resting position, the swap body is positioned in the swap body unloading zone and is unloaded by means of the unloading device.

15. Method according to claim 14, **characterized in that** to unload a roller container (104) in a first step the device is brought into a starting position with receiving means (102) present in the receiving position and with the discharge conveyor (2, 4, 6) present in an acceptance position, in a second step a loaded roller container (104) is brought onto the receiving means (102), and in a third step the roller containers (102) is tilted by means of the tilting device (114) towards the discharge conveyor (2, 4, 6), wherein the unloading opening (104a) of the roller container (104) is tilted over a conveying surface (7) of the discharge conveyor (2, 4, 6).

16. Method according to claim 15, **characterized in that** in the third step the conveying surface (7) of the discharge conveyor (2, 4, 6), in particular the receiving conveyor (6), is brought into a position inclined more than the roller container (104) relative to the vertical (120).

## Revendications

1. Dispositif servant à décharger un conteneur roulant ou une caisse mobile, comportant un dispositif de décharge (9) et une zone adjacente de décharge (8) d'une caisse mobile dans laquelle on peut positionner une caisse mobile qui doit être déchargée, et qui comporte un dispositif d'inclinaison (100) servant à recevoir et faire basculer un conteneur roulant rempli (104), le dispositif d'inclinaison étant disposé à côté du dispositif de décharge (9) et étant doté d'un moyen de réception (102) qui peut être placé dans une position de repos, où le dispositif d'inclinaison (100) et le moyen de réception (102) se trouvent à l'extérieur de la zone de décharge (8) de la caisse mobile et dans une position de réception, où le moyen de réception (102) se trouve en dehors de la zone de décharge (8) de la caisse mobile, **caractérisé en ce que** le moyen de réception est installé dans la position de réception en vue de recevoir un conteneur roulant (104) doté d'une ouverture de décharge latérale (104a) et peut être basculé dans une position d'inclinaison où les marchandises de détail contenues dans le conteneur roulant (104) se déplacent automatiquement depuis l'ouverture de décharge (104a) du conteneur roulant (104) jusqu'au dispositif de décharge (9), et **caractérisé en ce que**, dans la position de repos du moyen de réception, une caisse mobile peut être positionnée dans la zone de décharge (8) de la caisse mobile et peut être déchargée au moyen du dispositif de décharge (9), le dispositif d'inclinaison (100) et le dispositif de décharge (2, 4, 6) étant raccordés en termes de technologie de contrôle et commandés à partir d'un poste de commande central (130).

2. Dispositif selon la revendication 1, **caractérisé en ce que** le dispositif d'inclinaison (100) comporte un moyen de pivotement (108) qui permet de faire pivoter le moyen de réception (102) à partir de la position de repos autour d'un axe de pivotement (106) et vers la position de réception, où un conteneur roulant (104) sur une base (3) peut être transféré par roulement sur le moyen de réception (102), et comporte par ailleurs un système d'inclinaison (114) qui permet de faire basculer le moyen de réception (102) ainsi que le conteneur roulant (104) à partir de la position de réception autour d'un axe d'inclinaison horizontal (112) et vers la position d'inclinaison.

3. Dispositif selon la revendication 1 ou 2, **caractérisé en ce que** l'axe de pivotement (106) est disposé perpendiculairement par rapport à l'axe d'inclinaison (112).

4. Dispositif selon la revendication 1, 2 ou 3, **caractérisé en ce que** l'axe de pivotement (106) est disposé à l'horizontale.

5. Dispositif selon l'une quelconque des revendications précédentes, **caractérisé en ce que** le moyen de réception est disposé à la verticale en position de repos.

6. Dispositif selon l'une quelconque des revendications précédentes, **caractérisé en ce que** le moyen de réception (102) est doté d'un moyen servant à fixer le conteneur roulant (104) sur le moyen de réception (102).

7. Dispositif selon l'une quelconque des revendications précédentes, **caractérisé en ce que** le dispositif d'inclinaison comporte un bâti de machine, qui est mobile ou qui se trouve sur une base (3), et qui comprend une unité de commande, **caractérisé en ce que** le moyen de pivotement (108) et le dispositif d'inclinaison (114) sont tenus sur le bâti de machine et peuvent être commandés au moyen de l'unité de commande de manière à déplacer le moyen de réception (102) entre la position de repos, la position de réception et une position d'inclinaison.

8. Dispositif selon l'une quelconque des revendications précédentes, **caractérisé en ce que** le dispositif d'inclinaison (114) est disposé sur le moyen de réception et, ensemble, ils peuvent pivoter autour de l'axe de pivotement (106) à partir de la position de repos et vers la position de réception.

9. Dispositif selon l'une quelconque des revendications précédentes, **caractérisé en ce que** le dispositif de décharge comprend un transporteur de décharge (2, 4, 6), et **en ce qu'**il est possible de faire basculer l'ouverture de décharge (104a) du conteneur roulant (104) dans le sens de défilement de la surface de transport (7).

10. Dispositif selon la revendication 9, **caractérisé en ce que** le transporteur de décharge comporte un transporteur de réception (6) comprenant une surface de transport (7) qui, dans le sens du moyen de réception (102), est doté d'une extrémité de réception (6b) faisant saillie librement et d'une extrémité de distribution à l'arrière (6c), détournée du moyen de réception (102), un transporteur de transfert (4) muni d'une extrémité de transfert à l'avant (16) qui raccorde l'extrémité de distribution (6c) du transporteur de réception (6) et une extrémité de transfert arrière (18), et un transporteur de décharge (2) qui, au moyen d'une extrémité de tête (2a) raccorde l'extrémité de distribution (18) du transporteur de transfert (4), **caractérisé en ce que** le transporteur de transfert (4) est tenu de manière à pouvoir pivoter autour d'un premier axe de pivotement horizontal (26), disposé à travers son sens de défilement de la surface de transport (12) à l'extrémité de transfert (18) près de l'extrémité de tête (2a) du transporteur de décharge (2), et le transporteur de réception (6) est tenu de manière à pouvoir pivoter autour d'un deuxième axe de pivotement horizontal (30), disposé à travers son sens de défilement de la surface de transport (12) à l'extrémité de distribution (6c) près de l'extrémité de transfert (16) du transporteur de transfert (4).

11. Dispositif selon la revendication 10, **caractérisé en ce que** le transporteur de réception (6) et le transporteur de transfert (4), en pivotant autour des premier et deuxième axes de pivotement (26, 30), peuvent être placés dans une position d'acceptation, où la surface de transport du transporteur de transfert (4) est disposée essentiellement à l'horizontale ou bien à un angle maximum de 10°, 20° ou 30° par rapport à l'horizontale, et disposée en pente à partir du premier axe de pivotement (26), et où la surface de transport (7) du transporteur de réception (6) est disposée essentiellement à la verticale ou bien à un angle maximum de 5°, 10° ou 20° par rapport à la verticale sous le premier axe de pivotement (26), ou bien peut être placée dans une position de décharge, où la surface de transport (7) du transporteur de réception (6) en direction vers l'extrémité de réception (6b) du transporteur de réception (6) est inclinée à un angle qui est plus grand que dans la position d'acceptation par rapport à la verticale.

12. Dispositif selon l'une quelconque des revendications 9 à 11, **caractérisé en ce que** la surface de transport (7) du transporteur de décharge (2, 4, 6), à commencer par une position d'acceptation où la surface de transport (7) est disposée verticalement ou bien à un angle allant jusqu'à 5°, 10°, 20° ou 30° par rapport à la verticale, peut avoir son inclinaison réglée avec une dépendance prédéfinie envers le mouvement d'inclinaison du moyen de réception (102) ou bien en même temps que ce mouvement.

13. Dispositif selon l'une quelconque des revendications 1 à 12, **caractérisé en ce que** le dispositif de décharge (9) et le dispositif d'inclinaison (100) sont disposés sur un même bâti de machine qui peut être déplacé au moyen d'une unité de commande sur une base (3) de manière contrôlée.

14. Méthode servant à décharger un conteneur roulant ou une caisse mobile à l'aide d'un dispositif selon l'une quelconque des revendications 1 à 13, **caractérisée en ce que**, pour décharger un conteneur roulant (104), le dispositif d'inclinaison (100) est placé dans la position de réception, un conteneur roulant (104) rempli est placé sur le moyen de réception (102), le conteneur roulant (104) est incliné vers le dispositif de décharge (9) au moyen du dispositif d'inclinaison (100), et les marchandises de détail contenues dans le conteneur roulant (104) sont déchargées sur le dispositif de décharge (9), et **caractérisée en ce que**, pour décharger une caisse mobile, le dispositif d'inclinaison (100) est placé dans la position de repos, la caisse mobile est placée dans la zone de décharge de la caisse mobile et celle-ci est ensuite déchargée au moyen du dispositif de décharge.

15. Méthode selon la revendication 14, **caractérisée en ce que**, pour décharger un conteneur roulant (104) lors d'une première étape, le dispositif est placé dans une position de départ, le moyen de réception (102) se trouvant présent en position de réception et le transporteur de décharge (2, 4, 6) se trouvant présent en position de réception et, lors d'une deuxième étape, un conteneur roulant (104) rempli est placé sur le moyen de réception (102) et, lors d'une troisième étape, le conteneur roulant (102) est incliné au moyen du dispositif d'inclinaison (114) vers le transporteur de décharge (2, 4, 6), **caractérisée en ce que** l'ouverture de décharge (104a) du conteneur roulant (104) se trouve inclinée au-dessus d'une surface de transport (7) du transporteur de décharge (2, 4, 6).

16. Méthode selon la revendication 15, **caractérisée en ce que**, lors de la troisième étape, la surface de transport (7) du transporteur de décharge (2, 4, 6) et en particulier le transporteur de réception (6), est placée dans une position plus inclinée que l'inclinaison du conteneur roulant (104) par rapport à la verticale (120).
